# EUROPEAN PATENT SPECIFICATION

(11) **EP 1 907 835 B1**
(45) Date of publication and mention of the grant of the patent: **04.11.2009**
(21) Application number: 06744128.7
(22) Date of filing: 06.06.2006
(51) Int. Cl.: G01N 29/26, G01S 7/52, G10K 11/34

(54) **IMPROVED ACOUSTIC SENSOR AND METHOD**
VERBESSERTER AKUSTISCHER SENSOR UND VERFAHREN
DETECTEUR ACOUSTIQUE PERFECTIONNE ET PROCEDE

(30) Priority: 29.06.2005 GB 0513253
(43) Date of publication of application: 09.04.2008
(73) Proprietor: Oceanscan Limited, Aberdeen AB23 8JW (GB)
(72) Inventor: SVET, Victor Darievich, Aberdeen AB15 9OP (GB)
(74) Representative: Peter, Kenneth William
(86) International application number: PCT/GB2006/002074
(87) International publication number: WO 2007/000567

(56) References cited:
- US-A- 4 159 462
- US-A- 4 267 584
- US-A- 4 790 320
- US-A1- 2005 023 656
- YAOWU MO, TSUNEHISA TANAKA, KOJI INOUE, KAORU YAMASHITA, YOSHIHIKO SUZUKI: "Front-End Processor Using BBD Distributed Delay-Sum Architecture for Micromachined Ultrasonic Sensor Array" IEEE JOURNAL OF MICROELECTROMECHANICAL SYSTEMS, vol. 12, no. 4, August 2003 (2003-08), pages 506-512, XP002395703
- MO Y ET AL: "Integrated analog beam former based on bucket brigade device for micromachined ultrasonic sensor array" SENSORS AND ACTUATORS A, ELSEVIER SEQUOIA S.A., LAUSANNE, CH, vol. 101, no. 1-2, 30 September 2002 (2002-09-30), pages 203-211, XP004380170 ISSN: 0924-4247

## Description

### Field of the invention

The present invention relates to sensor apparatus operable to receive and process acoustic signals and a method of forming such sensor apparatus.

### Background to the invention

It is known to sense acoustic signals with piezoelectric transducers (PZTs)_{.} A PZT senses pressure variations and converts each sensed pressure variation to a change in an electrical signal of corresponding magnitude.

An application of acoustic sensing is in sonar apparatus used in sea-going vessels. In such sonar apparatus an acoustic signal is transmitted from the sonar apparatus. The transmitted signal is reflected in part by an object with the reflected signal being received by the sonar apparatus where it is detected by a PZT. Improved spatial coverage of an object is achieved by arranging a number of PZT elements in an array. A linear or one-dimensional array of PZT elements provides sensed information from an object in two dimensions. A two-dimensional array provides sensed information from an object in three dimensions. Whichever of the one-dimensional array and the two-dimensional array is used, the spatial coverage and the spatial resolution is proportional to the number of PZT elements used in the array. Spatial coverage and spatial resolution are also affected by the frequency (and hence the wavelength) of she acoustic signal transmitted by the sonar apparatus.

Sonar apparatus often has the capability to provide graphical images, e.g. on a visual display unit, of an area being sensed by the sonar apparatus. It is desirable to provide such a graphical image in as near real time as possible. In creating a graphical image of an area being sensed account needs to be taken of differences in propagation time for a first acoustic echo from a point on an object to a first PZT element in a PZT array and a second acoustic echo from the same point on the object to a second PZT element in the PZT array. This is achieved by changing a phase of the first acoustic echo in relation to the second acoustic echo. In addition, where the sonar apparatus provides for focussing of the acoustic signal at a selected one of several different areas, a selectable time delay is needed for each PZT elements. Changing the configuration of the time delays of the PZT elements in the array provides for focussing of an acoustic signal at different areas. This focussing effect amount to changing a phase between and amongst electronic signals produced by different PZT elements. In sonar apparatus the changing of the phase to cater for a difference in propagation time and/or to provide for signal focusing is termed beamforming. Known apparatus for carrying out beamforming use semiconductor technologies, such as CMOS. Charge Coupled Devices (CCDs) have also been used. Whatever the technology used beamforming circuitry incorporates shift registers for storing and processing electronic signals from PZT elements in an array. In the beamforming circuitry the electronic signals from the PZT elements are each subject to a predetermined delay to bring about a focusing effect and/or take account of propagation delays. After the beamforming process an image is formed electronically for display on a VDU.

The article by Yaowu Mo et al: "Front-End Processor Using BBD Distributed Delay-Sum Architecture for Micromachined Ultrasonic Sensor Array" , published on the IEEE JOURNAL OF MICROELECTROMECHANICAL SYSTEMS, vol. 12, no. 4, August 2003, pages 506-512, shows an ultrasonic sensor array integrated with the front end processing circuit.

It is an aim of the present invention to address deficiencies of known acoustic sensor apparatus.

It is a further aim of the invention to provide a sensor apparatus that is operable to receive and process acoustic signals.

### Statement of invention

According to a first aspect of the present invention there is provided a sensor apparatus comprising:
a plurality of acoustic transducers, each operative to produce a change in an electronic output signal in response to receipt of an acoustic signal; and
a plurality of processing circuits each operative to produce a phase shift;
characterised in that:
   each of the acoustic transducers has a respective one of the processing circuits associated therewith;
   each processing circuit being configured to receive a first electronic output signal and a second electronic output signal produced by its respective acoustic transducer and operative to shift a phase of the first electronic output signal and second electronic output signal in relation to each other; and
   each acoustic transducer being juxtaposed with its associated respective processing circuit such that a respective unitary body is formed.

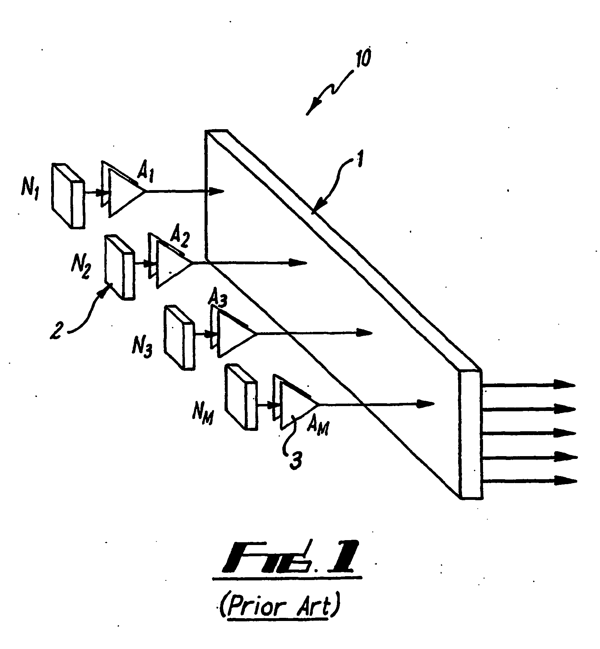

The present inventor has appreciated that known sensor apparatus have shortcomings. Such shortcomings will be described with reference to Figure 1, which shows a known acoustic sensing apparatus. In the apparatus, PZT elements 2 are provided separately of a beamforming circuit 1. Each PZT element 2 is electrically connected to the beamforming unit 1. A pre-amplifier 3 is provided between each PZT element 2 and the beamforming circuit 1. Each preamplifier 3 amplifies the electrical signals output by the PZT element before the amplified signals are processed by the beamforming circuit. Each preamplifier 3 is normally highly sensitive such that it is capable of amplifying signals produced by a PZT elements in response to low amplitude pressure variations.

The present inventor has become aware that providing the PZT elements (which constitute acoustic transducers) physically separate from the beamforming circuit (which constitutes processing circuitry) requires electrical conductors between each acoustic transducer and the processing circuitry. In certain applications, the length of the electrical conductors may be considerable. For example, in underwater sonar applications the acoustic transducers are typically provided in a sensor head on a Remotely Operable Vehicle (ROV) and the processing circuitry provided in a surface-vessel, with electrical connections made between the acoustic transducers and the processing circuitry being by means of a cable from the ROV to the surface vessel. Having electrical conductors between the acoustic transducers and the processing circuitry can presents disadvantages. For example, interference between electrical conductors from different acoustic transducers can arise. Also, the signals carried by such electrical conductors can be subject to a deterioration in quality as they pass along the conductors. Such problems tend to increase in scale as the length of the electrical conductors increase. The present inventor has appreciated the above noted and other such problems associated with having spaced apart and electrically connected acoustic transducers and processing circuitry. Thus, the present invention has been devised such that it involves juxtaposing the acoustic transducer(s) and the processing circuitry such that they form a unitary body.

Preferably, each processing circuit (34) has dimensions less than or similar to the dimensions of the associated transducer (32).

More specifically, the at least one acoustic transducer may be operative to produce at least one of a change in a charge level and a change in a voltage level in response to receipt of an acoustic signal.

Alternatively or in addition, the at least one acoustic transducer may comprise a piezoelectric transducer (PZT) operative to produce a change in a charge level.

More specifically, the piezoelectric transducer may comprise a member formed of at least one of Polyvinylidene Fluoride (PVDF) and a piezoceramic material.

The processing circuitry may comprise an analogue shift register configured to receive each of the first electronic output signal and the second electronic output signal and to shift the phase of the first electronic output signal and the second electronic output signal in relation to each other.

More specifically, the analogue shift register may be controllable to change a time delay of an electronic output signal passing through the shift register.

Alternatively or in addition, the analogue shift register may comprise a Charge Coupled Device (CCD) configured to receive each of the first electronic output signal and the second electronic output signal and to shift the phase of the first electronic output signal and the second electronic output signal in relation to each other.

The plurality of acoustic transducers may be disposed in an array, such as a one or a two dimensional array.

Alternatively or in addition, the sensor apparatus may further comprise at least one amplifier configured to amplify a magnitude of an electrical signal received by the amplifier.

More specifically, the sensor apparatus may be configured such that the amplifier receives an electrical signal from the acoustic transducer and provides an amplified electrical signal to the processing circuitry. An amplifier may find use where the acoustic transducer provides a low level electrical signal that would benefit from amplification to better match the dynamic range of the processing circuitry. An amplifier may also find use in applications of the sensor apparatus where high frequency acoustic signals are used, e.g. in medical ultrasonic scanners. In such applications the albeit small resistance of conductors between the acoustic transducers and the processing circuitry can become effectively higher. Thus, in certain circumstances it may be desirable to compensate for this effective higher resistance by providing an amplifier.

Alternatively or in addition, the sensor apparatus may further comprise at least one buffer configured to substantially maintain an output connection of the buffer at a signal level corresponding to a signal level at an input to the buffer where a load within a predetermined limit is applied at the output connection of the buffer.

More specifically, the sensor apparatus may be configured such that the buffer receives an electrical signal from the acoustic transducer and provides a buffered electrical signal to the processing circuitry. A buffer may find use where there is significant electrical loading of the acoustic transducer, which may otherwise pull down a voltage level at an output of the acoustic transducer.

In a first form, the acoustic transducer and the processing circuitry may be formed as separate bodies, the acoustic transducer and the processing circuitry being rigidly coupled to each other.

More specifically, electrical contacts of the acoustic transducer may be electrically and mechanically coupled to electrical contacts of the processing circuitry to provide rigid coupling between the acoustic transducer and the processing circuitry.

More specifically, the acoustic sensor may comprise a plurality of rigid and electrically conductive connecting elements that provide the electrical and mechanical coupling of the respective contacts of the acoustic transducer and the processing circuitry. The connecting elements may be formed at least in part of solder, such as an indium based solder.

In a second form, the acoustic transducer and the processing circuitry may form part of a monolithic body.

More specifically, the acoustic transducer and the processing circuitry may be disposed on a semiconducting substrate. The semiconducting substrate may be formed, for example, of silicon. Thus, the acoustic sensor may be formed as what is termed a system on a chip or an integrated circuit.

More specifically, the processing circuitry may be formed in and over the semiconducting substrate and the acoustic transducer may be disposed over the processing circuitry.

According to an application of the present invention, there is provided a sonar apparatus comprising a sensor apparatus as defined above.

According to a second aspect of the present invention, there is provided a method of forming a sensor apparatus as defined above, the method comprising juxtaposing each of a plurality of acoustic transducers with a respective one of a plurality of processing circuits to form a respective unitary body.

More specifically, the method may comprise forming the at least one acoustic transducer and the processing circuitry as separate bodies, followed by rigidly coupling the formed at least one acoustic transducer and the processing circuitry such that the acoustic sensor and the processing circuitry are juxtaposed in a unitary body.

More specifically, the at least one acoustic transducer and the processing circuitry may be rigidly coupled by the step of electrically and mechanically coupling electrical contacts of the acoustic transducer to electrical contacts of the processing circuitry.

More specifically, the step of electrically and mechanically coupling the respective electrical contacts may comprise soldering the respective contacts to each other. Thus, the method may comprise what is termed in the art as a flip—chip method.

Alternatively, the method may comprise forming the at least one acoustic transducer and the processing circuitry as part of a monolithic body.

More specifically, the method may comprise disposing the at least one acoustic transducer and the processing circuitry on a semiconducting substrate, such as a silicon substrate.

There will now be described by way of example only embodiments of the present invention with reference to the following drawings, in which-:
Figure 1 is a schematic representation of a prior art acoustic sensor array and beamforming circuit;
Figure 2a is a perspective view of a PZT-CCD acoustic sensor element in accordance with the present invention;
Figure 2b is a perspective view of a one-dimensional array of PZT-CCD acoustic sensor elements as shown in Figure 2a;
Figure 3 is a cross-sectional representation of a sensor apparatus in accordance with a first embodiment of the invention;
Figure 4 is a cross-sectional representation of a sensor apparatus in. accordance with a second embodiment of the invention;
Figure 5 is a schematic perspective view of a PZT-CCD sensor array in accordance with the present invention;
Figure 6 is a schematic plan view of an alternative PZT-CCD array configuration in accordance with the present invention; and,
Figure 7 is a schematic diagram of a sampling system in accordance with the present invention.

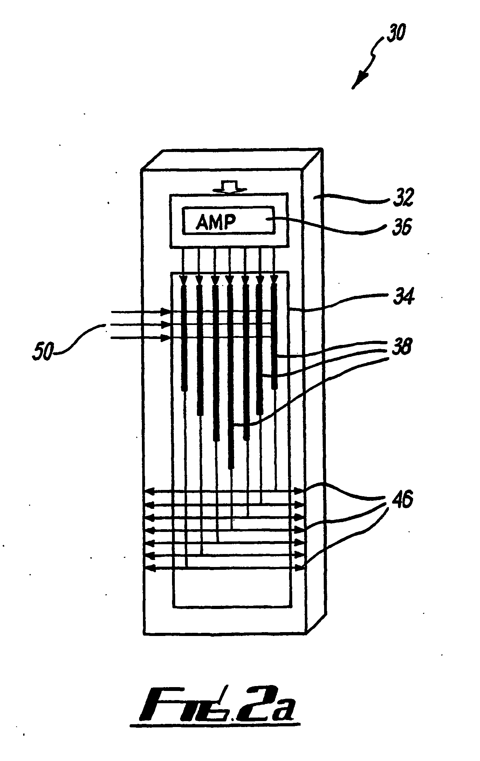

With reference to Figure 2a, there is depicted PZT-CCD acoustic sensor element 30. The sensor element 30 comprises a PZT 32 capable of producing a voltage in response to a received acoustic wave. The PZT 32 is made from a Polyvinylidene Fluoride (PVDF) film, although in other cases a different piezoelectric material may be used, such as solid piezoceramic. The PZT 32 is responsive to acoustic signals and converts a received acoustic signal to an electrical signal (such as a voltage or a charge packet) that is proportional to the received acoustic signal.

On a back surface of the PZT 32, a CCD matrix 34 consisting of a 2D array of elements is coupled to the PZT 32. Ordered columns of array elements form sample lines 38 of the CCD matrix 34. The sample lines 38 are spaced apart across the CCD matrix 34. Each sample line 38 acts as an analogue shift register shifting received charge packets from element to element through the sample line. The sample lines 38 and elements thereof may be arranged in different spatial formations in order to store and shift charge packets as required for different applications. Typically, the CCD matrix 34 has a dynamic range between about 80 dB and about 90 dB. CCD matrices with other dynamic ranges may be used according to the particular application and implementation.

The 2D CCD matrix 34 has dimensions less than or similar to the dimensions of the back surface of the PZT 32. In general, the dimensions of the PZT 32 may be in the region of 0.1 to 100 millimetres depending on the particular application and implementation, whilst each individual element of the CCD sample lines 38 may be between about 10 and about 50 micrometers.

The sensor element 30 has a preamplifier 36, which is present where low level acoustic signals are received by the sensor element 30 and corresponding low level analogue electrical signals are produced by the PZT 32. Control signals 50 control the entry into and progress through the sample lines 38 of the analogue electrical signals. The control signals 50 provide the means whereby an analogue electrical signal can be subject to a predetermined time delay as it progresses through a sample line 38. Control lines 50 are used such that different signal lines 38 are subject to different time delays. The analogue electrical signals in the sample lines 38 are read out of the sample lines via an output signals lines 46.

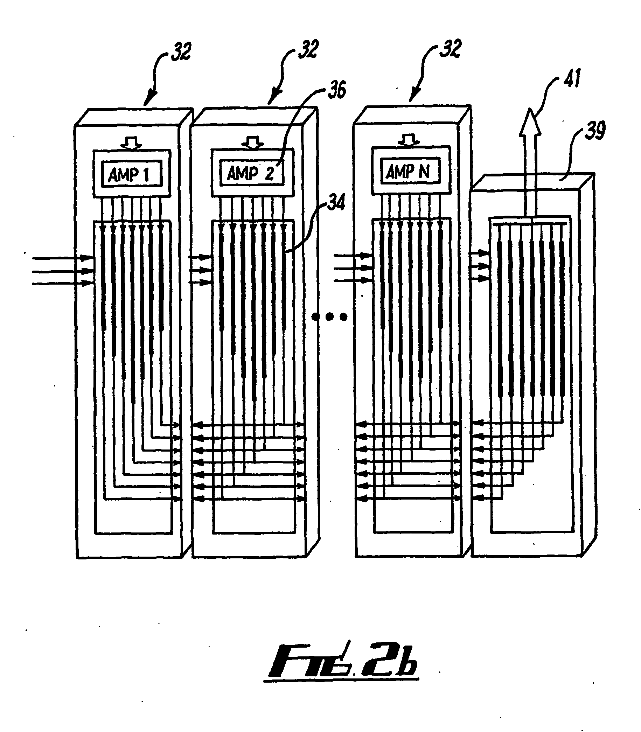

In an alternative form shown in Figure 2b, the acoustic sensor element may comprise a plurality of separate PZT members 32, with each PZT member 32 being provided with a preamplifier 36 and a CCD matrix 34 consisting of a 2D array of elements. Thus, each separate PZT member has the form of the acoustic sensor element shown in Figure 2a. The provision of a plurality of separate PZT members 32 provides for parallel beamforming in accordance with known principles. More specifically, the arrangement is a so-called successive beamforming arrangement, in which the acoustic sensor elements 32 have the same configuration of sample lines 38 and the signals from the acoustic sensor elements are summed successively in a linear CCD register 39 to produce an output signal 41. The number of sample lines 38 in each acoustic sensor element determines the number of formed parallel beams. In the example of Figure 2b there are seven lines and hence seven parallel beams.

In an un-illustrated form of the present invention, the parallel arrangement of sample lines (and hence parallel acoustic beams) is replaced by an arrangement having a single sample line. In use, a single acoustic beam is repeatedly used to scan a target with the single sample line used to process sensed acoustic signals from each scan in turn. This arrangement is structurally simpler and of lower cost than the arrangement shown in Figure 2b. A disadvantage is that this arrangement provides for slower image formation than the parallel approach of Figure 2b. Based on the description given above with reference to Figure 2b it will be clear to the skilled person how the arrangement of Figure 2b should be modified to provide for a single sample line and repeated scanning of a target with a single acoustic beam.

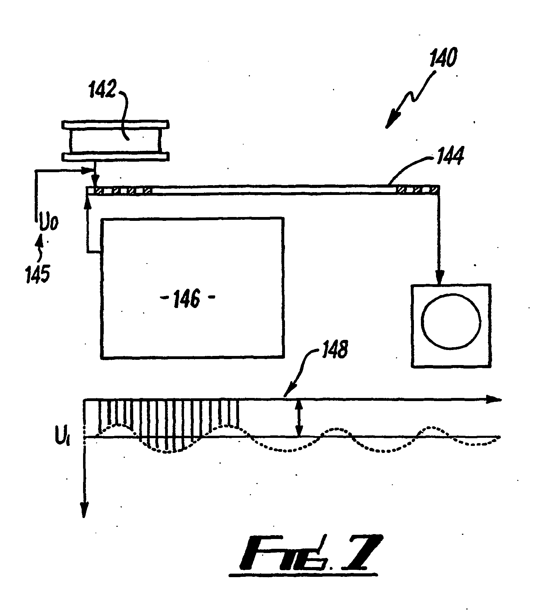

Figure 7 shows a sampling system 140 for reading a sensed acoustic wave into a CCD register 144 comprising a single sample line 38. The system comprises a transducer 142, a controlling unit 146 and the CCD register 144. The CCD register 144, upon receiving a voltage control input 145, digitally samples an analogue electrical signal arriving from the transducer 142. The sampling of the signal is at a rate sufficient to avoid aliasing and is above the Nyquist frequency. The analogue electrical signal is sampled and stored in the CCD register 144. As described above, the sampled electrical signal may be subject to a predetermined time delay. This provides for time delayed or phase-shifted electrical signal at the output of the CCD register 144. The time delayed electrical signal can be used along with other similarly time-delayed electrical signals to provide for a focussing effect and/or to take account of propagation delays, in accordance with known beamforming principles.

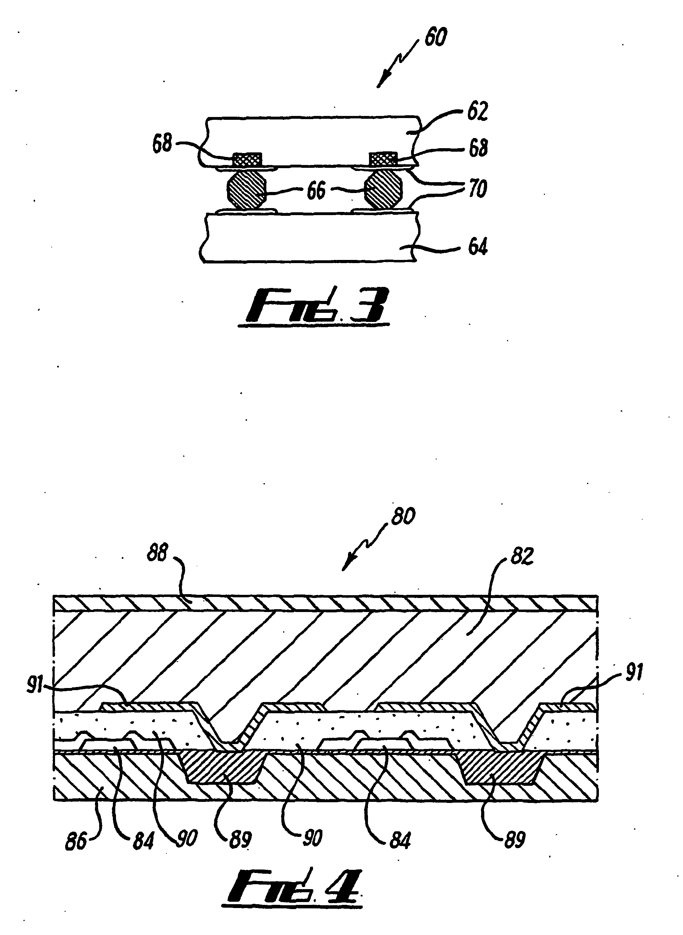

Figure 3 shows one form of sensor apparatus according to the present invention. In Figure 3 a PZT 32 and a CCD matrix 34 are rigidly coupled to each other to form a unitary body 60. The PZT 32 and the CCD matrix 34 have been formed separately. The unitary body 60 is formed by means of metallization layers 70 on the PVDF film 62 of the PZT 32 and on a silicon layer 64 of the CCD matrix. Metal bumps 66 in contact with the metallization layers 70 provide a rigid coupling and electrical connections between the PZT and the CCD matrix. The metal bumps 66 may be formed, for example, of indium solder. A reading inlet structure 68 of the PZT is also shown in Figure 3. The thus described structure is formed by what is often termed in the art as a flip-chip process.

Figure 4 shows.another form of implementing a sensor apparatus of the present invention. Figure 4 shows an integrated system (which constitutes a unitary body) in which polysilicon electrodes 84 of a CCD matrix 34 and PVDF film of a PZT 32 are formed on a silicon substrate 86. Floating diodes 89 are connected to electrodes 91 or the PVDF and the substrate 86. Poly-silicon electrodes 84 are separated from each other and electrically isolated via insulators 90 provided within the integrated system 80. The insulators 90 keep the PVDF film or PZT separated from the substrate 86. A top metallization layer 88 is provided above the PVDF layer or PZT.

Application of the PVDF film 82 may be by a known sputtering process. A known polarisation process is then used to give the PVDF film 82 the necessary piezoelectric properties. Finally the PVDF film is metallised.

The integrated system 80 of Figure 4 provides for minimisation of the pitch of the CCD matrix thereby reducing space requirements. In addition, production of a sensor apparatus according to this approach involves comparatively few steps and is not labour intensive and can thereby provide for a low unit device cost.

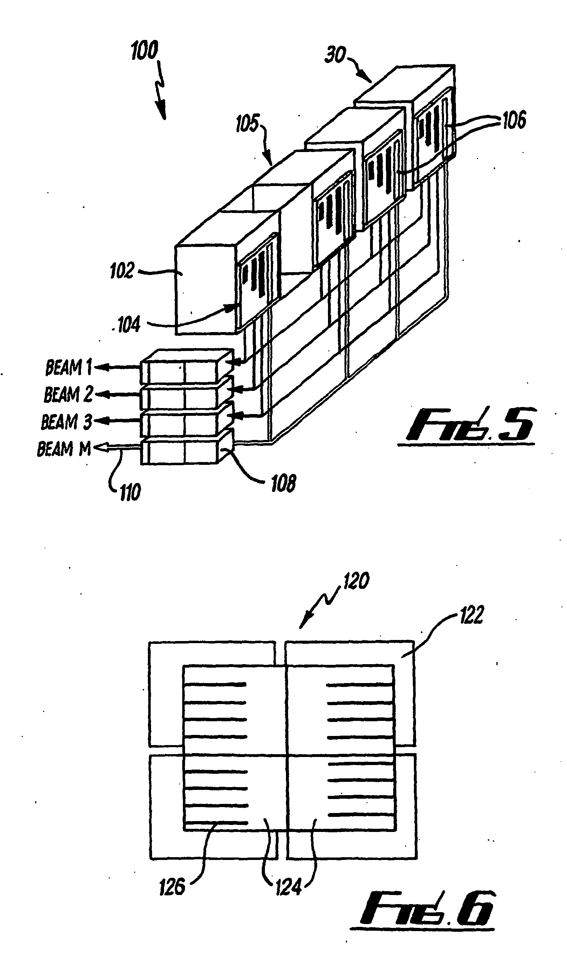

Figure 5 shows a PZT-CCD acoustic sensor array 100 in accordance with the present invention. The array 100 comprises PZT-CCD acoustic sensor elements 30 as described above. Each PZT element 30 has a number of CCD sample lines 106 which temporarily store and impart a time delay to electronic signals in accordance with known beamforming principles. More specifically, within the array 100, a sensed signal in the sample lines 106 of one sensor 30 has a time delay that corresponds with a time delay of a sensed signal in sample lines of each of the other PZT sensor elements 30. In this arrangement, sensed signals in the respective sample lines that are of common phase have a common look angle. A beam summation element 108 then combines sensed signals having a common look angle to provide an enhanced beam signal for this common look angle. The look angle may correspond to an area of focus on a target body. By summing the common look angle sensed signals by means of summation units 108, focused beam information from the target is obtained and is output to form a real-time image. The quality of the image is proportional to the number of delay lines and PZT transducers in the sensor array.

Particular combinations of time delayed sensed signals may be varied. Also, such a change in the configuration in the sensor array can be made without departing from the scope of the invention. For example, the processing of look angles may differ according to the application at hand. For example, it may be a requirement to locus on different areas of a target. In this case, the particular combination of sensed signals will be different from that required to form an image of the whole target. Furthermore the sensor array may be configured to take into account different frequency signals.

Although the PZT sensor elements 30 of the array 100 of Figure 5 are shown in the form of a line array, it is to be understood that the sensor elements 30 may be arranged to form a two-dimensional or multi-dimensional array. The one-dimension array of Figure 5 is intended primarily for illustrative and explanatory purposes.

Figure 6 shows a further form 120 of a PZT-CCD array according to the present invention. In this example, there are four PZT elements 122 oriented in a two-dimensional array with a CCD matrix 124 bonded to the PZT element 122 as described above. However, the CCD matrix 124 overlaps the edges of the PZTs 122. Sample lines 126 of the CCD matrix 124 provide a series of delay lines for signals from respective transducers 122. It is to be appreciated that the number of sample lines 126 may be changed and that the orientation, location and configuration of the sample lines may also be changed. The selection of the number of sample lines 126 and PZT elements 122 will depend on the application and will normally require different control electronics. The overlapping PZT-CCD configuration of Figure 6 may advantageously be employed to maximise usage of available CCD sample lines and thus help to reduce unit device costs, where CCD matrices are used in applications involving the use of redundant sample lines.

The sensor arrays described above may, for example, be used in applications such as sonar, NDT, ultrasound or medical diagnostics where real time acoustic imaging is desirable. The spacing of the PZT-CCD elements in a sensor array is selected to provide an appropriate imaging resolution. In general, closer spacing of sensor elements provides increased resolution.

A number of considerations are to be taken into account when designing an appropriate system. In particular, high resolution images are often sought and thus it is desirable to have transducer arrays comprising a large number of transducers. Furthermore, it is often necessary to obtain information from many locations on a target so that a sharp, i.e. high resolution, image can be produced. Resolving the target in this manner requires the ability to obtain acoustic information from many different angles. This in turn necessitates the use of a minimum number of sample lines in the acoustic sensor apparatus.

The juxtaposition of the PZT element and the CCD matrix such that they form a unitary body provides a number of benefits. More specifically, there is no need to provide electrical conductors between each PZT element and the CCD matrix. Furthermore, there is reduced cross-talk across signal paths from different PZT sensor elements. Acoustic sensor apparatus according to the invention can provide a low noise floor and high integrity output signals from a large number of closely spaced CCD matrix sample lines. This is particularly advantageous in beamforming systems where a large number.of sample lines are used.

In certain circumstances, pre-amplification between the PZT and the CCD can be dispensed with. This is because the close proximity of PZT sensor element and beamforming circuitry can provide for a significant reduction in loss of amplitude of electrical signals, which would otherwise take place where long conductors are present between each PZT sensor element and the beamforming circuitry. As the frequency of operation also increases the effective length of a conductor increases. Thus, for very high frequencies, e.g. as may be encountered in medical applications, amplification and/or buffering may be required to maintain signal amplitudes even where the PZT elements and the beamforming circuitry are juxtaposed.

PZT-CCD sensor arrangements according to the present invention can provide wider benefits, such as opening up the possibility of having high-speed, high-resolution parallel processing of acoustic information. PZT-CCD sensor arrangements according to the present invention can have smaller dimensions and lower power consumption than prior art arrangements. Furthermore, arrangements having a plurality of transducer elements and/or CCD arrays of arbitrary form can be employed and configured as required, to thereby provide a flexible, multi-purpose sensor arrangement that can be applied in different applications.

The present invention can provide for two-dimensional image processing for use in real time imaging applications where high spatial resolution or high speed imaging/processing is required. In addition, the present invention can provide for low-cost production of multi-dimensional transducer arrays as the number of electronic components typically used in known arrangements is reduced.

## Claims

1. A sensor apparatus (100) comprising:
a plurality of acoustic transducers (32), each operative to produce a change in an electronic output signal in response to receipt of an acoustic signal; and
a plurality of processing circuits (34) each operative to produce a phase shift;
**characterised in that**:
each of the acoustic transducers (32) has a respective one of the processing circuits (34) associated therewith;
each processing circuit (34) being configured to receive a first electronic output signal and a second electronic output signal produced by its respective acoustic transducer (32) and operative to shift a phase of the first electronic output signal and second electronic output signal in relation to each other; and
each acoustic transducer (32) being juxtaposed with its associated respective processing circuit (34) such that a respective unitary body (30) is formed.

2. Apparatus according to claim 1, in which each processing circuit (34) has dimensions less than or similar to the dimensions of the associated transducer (32).

3. Apparatus according to claim 1 or claim 2, in which each of the acoustic transducers (32) is operative to produce at least one of a change in a charge level and an a change in a voltage level in response to receipt of an acoustic signal.

4. Apparatus according to any preceding claim, in which each of the acoustic transducers (32) comprises a piezoelectric transducer operative to produce a change in a charge level.

5. Apparatus according to claim 4, in which each piezoelectric transducer (32) comprises a member formed of polyvinylidene fluoride (PVDF) or a piezoceramic material.

6. Apparatus according to any preceding claim, in which each processing circuit (34) comprises an analogue shift register (39) configured to receive each of the first electronic output signal and the second electronic output signal and to shift the phase of the first electronic output signal and the second electronic output signal in relation to each other.

7. Apparatus according to claim 6, in which the analogue shift register (39) is controllable to change a time delay of an electronic output signal passing through it.

8. Apparatus according to claim 6 or claim 7, in which in which the analogue shift register comprises a charge coupled device (CCD) (39) configured to receive each of the first electronic output signal and the second electronic output signal and to shift the phase of the first electronic output signal and the second electronic output signal in relation to each other.

9. Apparatus according to any preceding claim, in which the sensor apparatus (100) further comprises at least one amplifier (36).

10. Apparatus according to claim 9, in which a plurality of amplifiers (36) is provided, a respective amplifier (36) being interposed between each acoustic transducer (32) and its respective processing circuit (34).

11. Apparatus according to any preceding claim, further comprising at least one buffer configured to substantially maintain an output connection of the buffer at a signal level corresponding to a signal level at an input to the buffer when a load within a predetermined limit as applied at the output connection of the buffer.

12. Apparatus according to claim 11, in which a respective buffer is interposed between each acoustic transducer (32) and its associated processing circuit (34).

13. Apparatus according to any preceding claim, in which the acoustic transducers (32) are formed as separate bodies from the processing circuits (34), and each of said unitary bodies (30) consists of an acoustic transducer (32) and a processing circuit (34) rigidly coupled together.

14. Apparatus according to claim 13, in which electrical contacts (70) of each acoustic transducer (32) are electrically and mechanically coupled to electrical contacts (70) of its respective processing circuit (34) to provide rigid coupling between the acoustic transducer (32) and the processing circuit (34).

15. Apparatus according to claim 14, in which said contacts are connected by respective rigid and electrically conductive coupling elements (66).

16. Apparatus according to claim 15, in which said coupling elements are formed at least in part of solder.

17. Apparatus according to any of claims 1 to 12, in which each unitary body (30) provided by a juxtaposed acoustic transducer (32) and processing circuit (34) forms part of a monolithic body (80).

18. Apparatus according to claim 17, in which the acoustic transducer (32) and the processing circuit (34) are disposed on a common semiconductor substrate (86).

19. Apparatus according to claim 18, in which the processing circuit (34) is formed in and over the substrate (86) and the acoustic transducer (32) is formed over the processing circuit (34).

20. Sonar apparatus comprising sensor apparatus according to any preceding claim.

21. A method of forming a sensor apparatus (100) according to any preceding claim, the method comprising juxtaposing each of a plurality of acoustic transducers (32) with a respective one of a plurality of processing circuits (34) to form a respective unitary body (30).

22. The method of claim 21, in which each of the acoustic transducers (32) and each of the processing circuits (34) is formed as a separate body; and in which each acoustic transducer (32) is rigidly coupled to a respective processing circuit (34) to form a said unitary body (30).

23. The method according to claim 22, in which the acoustic transducer (32) and the processing circuit (34) are rigidly coupled by the step of electrically and mechanically coupling electrical contacts (70) of the one to electrical contacts (70) of the other.

24. The method according to claim 23, in which said contacts are mechanically and electrically coupled by soldering the respective contacts (70) to each other.

25. The method according to claim 21, in which each acoustic transducer (32) and its respective processing circuit (34) are formed as part of a monolithic body (80).

26. The method of claim 25, in which each acoustic transducer (32) and its respective processing circuit (34) is disposed on a semiconductor substrate (86).

## Patentansprüche

1. Eine Sensorvorrichtung (100), die Folgendes beinhaltet:
eine Vielzahl von Akustikwandlern (32), die jeweils betriebsfähig sind, um als Reaktion auf den Erhalt eines akustischen Signals eine Änderung eines elektronischen Ausgangssignals zu erzeugen; und
eine Vielzahl von Verarbeitungsschaltungen (34), die jeweils betriebsfähig sind, um eine Phasenverschiebung zu erzeugen;
**dadurch gekennzeichnet, dass**
jedem der Akustikwandler (32) eine jeweilige von den Verarbeitungsschaltungen (34) zugehörig ist;
jede Verarbeitungsschaltung (34) konfiguriert ist, um ein erstes elektronisches Ausgangssignal und ein zweites elektronisches Ausgangssignal, die von ihrem jeweiligen Akustikwandler (32) erzeugt werden, zu empfangen, und betriebsfähig ist, um eine Phase des ersten elektronischen Ausgangssignals und des zweiten elektronischen Ausgangssignals im Verhältnis zueinander zu verschieben; und
jeder Akustikwandler (32) neben seine zugehörige jeweilige Verarbeitungsschaltung (34) gestellt wird, so dass ein jeweiliger einheitlicher Körper (30) gebildet wird.

2. Vorrichtung gemäß Anspruch 1, wobei jede Verarbeitungsschaltung (34) Ausmaße aufweist, die geringer als oder ähnlich den Ausmaßen des zugehörigen Wandlers (32) sind.

3. Vorrichtung gemäß Anspruch 1 oder Anspruch 2, wobei jeder der Akustikwandler (32) betriebsfähig ist, um als Reaktion auf den Erhalt eines akustischen Signals mindestens eines von einer Änderung eines Ladezustands und einer Änderung eines Spannungspegels zu erzeugen.

4. Vorrichtung gemäß einem der vorhergehenden Ansprüche, wobei jeder der Akustikwandler (32) einen piezoelektrischen Wandler beinhaltet, der betriebsfähig ist, um eine Änderung eines Ladezustands zu erzeugen.

5. Vorrichtung gemäß Anspruch 4, wobei jeder piezoelektrische Wandler (32) ein Bauelement beinhaltet, das aus Polyvinylidenfluorid (PVDF) oder einem Piezokeramikmaterial gebildet ist.

6. Vorrichtung gemäß einem der vorhergehenden Ansprüche, wobei jede Verarbeitungsschaltung (34) ein analoges Schieberegister (39) beinhaltet, das konfiguriert ist, um jedes von dem ersten elektronischen Ausgangssignal und dem zweiten elektronischen Ausgangssignal zu erhalten und um die Phase des ersten elektronischen Ausgangssignals und des zweiten elektronischen Ausgangssignals im Verhältnis zueinander zu verschieben.

7. Vorrichtung gemäß Anspruch 6, wobei das analoge Schieberegister (39) steuerbar ist, um eine Zeitverzögerung eines durch dieses gehenden elektronischen Ausgangssignals zu ändern.

8. Vorrichtung gemäß Anspruch 6 oder Anspruch 7, wobei das analoge Schieberegister ein ladungsgekoppeltes Schaltelement (CCD) (39) beinhaltet, das konfiguriert ist, um jedes von dem ersten elektronischen Ausgangssignal und dem zweiten elektronischen Ausgangssignal zu erhalten und um die Phase des ersten elektronischen Ausgangssignals und des zweiten elektronischen Ausgangssignals im Verhältnis zueinander zu verschieben.

9. Vorrichtung gemäß einem der vorhergehenden Ansprüche, wobei die Sensorvorrichtung (100) ferner mindestens einen Verstärker (36) beinhaltet.

10. Vorrichtung gemäß Anspruch 9, wobei eine Vielzahl von Verstärkern (36) bereitgestellt ist, wobei ein jeweiliger Verstärker (36) zwischen jeden Akustikwandler (32) und seine jeweilige Verarbeitungsschaltung (34) geschaltet ist.

11. Vorrichtung gemäß einem der vorhergehenden Ansprüche, die ferner mindestens einen Puffer beinhaltet, der konfiguriert ist, um einen Ausgangsanschluss des Puffers im Wesentlichen bei einem Signalpegel zu halten, welcher einem Signalpegel an einem Eingang zu dem Puffer entspricht, wenn eine Ladung innerhalb einer zuvor bestimmten Grenze an den Ausgangsanschluss des Puffers angelegt wird.

12. Vorrichtung gemäß Anspruch 11, wobei ein jeweiliger Puffer zwischen jeden Akustikwandler (32) und seine zugehörige Verarbeitungsschaltung (34) geschaltet ist.

13. Vorrichtung gemäß einem der vorhergehenden Ansprüche, wobei die Akustikwandler (32) als separate Körper von den Verarbeitungsschaltungen (34) gebildet sind und wobei jeder der einheitlichen Körper (30) aus einem Akustikwandler (32) und einer Verarbeitungsschaltung (34), die starr aneinander gekoppelt sind, besteht.

14. Vorrichtung gemäß Anspruch 13, wobei elektrische Kontakte (70) von jedem Akustikwandler (32) elektrisch und mechanisch an elektrische Kontakte (70) seiner jeweiligen Verarbeitungsschaltung (34) gekoppelt sind, um eine starre Kopplung zwischen dem Akustikwandler (32) und der Verarbeitungsschaltung (34) bereitzustellen.

15. Vorrichtung gemäß Anspruch 14, wobei die Kontakte durch jeweilige starre und elektrisch leitende Kopplungselemente (66) verbunden sind.

16. Vorrichtung gemäß Anspruch 15, wobei die Kopplungselemente mindestens teilweise aus Lötmetall gebildet sind.

17. Vorrichtung gemäß einem der Ansprüche 1 bis 12, wobei jeder einheitliche Körper (30), der durch einen Akustikwandler (32) und eine Verarbeitungsschaltung (34), welche nebeneinander gestellt sind, bereitgestellt wird, einen Teil eines monolithischen Körpers (80) bildet.

18. Vorrichtung gemäß Anspruch 17, wobei der Akustikwandler (32) und die Verarbeitungsschaltung (34) auf einem gemeinen Halbleitersubstrat (86) angeordnet sind.

19. Vorrichtung gemäß Anspruch 18, wobei die Verarbeitungsschaltung (34) in und über dem Substrat (86) gebildet ist und der Akustikwandler (32) über der Verarbeitungsschaltung (34) gebildet ist.

20. Eine Sonarvorrichtung, die eine Sensorvorrichtung gemäß einem der vorhergehenden Ansprüche beinhaltet.

21. Ein Verfahren zum Bilden einer Sensorvorrichtung (100) gemäß einem der vorhergehenden Ansprüche, wobei das Verfahren das Stellen jedes von einer Vielzahl von Akustikwandlern (32) neben eine jeweilige von einer Vielzahl von Verarbeitungsschaltungen (34), um einen jeweiligen einheitlichen Körper (30) zu bilden, beinhaltet.

22. Verfahren gemäß Anspruch 21, wobei jeder der Akustikwandler (32) und jede der Verarbeitungsschaltungen (34) als ein separater Körper gebildet ist und wobei jeder Akustikwandler (32) starr an eine jeweilige Verarbeitungsschaltung (34) gekoppelt ist, um den einheitlichen Körper (30) zu bilden.

23. Verfahren gemäß Anspruch 22, wobei der Akustikwandler (32) und die Verarbeitungsschaltung (34) durch den Schritt des elektrischen und mechanischen Koppelns von elektrischen Kontakten (70) des einen an elektrische Kontakte (70) des anderen starr gekoppelt werden.

24. Verfahren gemäß Anspruch 23, wobei die Kontakte durch das Löten der jeweiligen Kontakte (70) aneinander mechanisch und elektrisch gekoppelt werden.

25. Verfahren gemäß Anspruch 21, wobei jeder Akustikwandler (32) und seine jeweilige Verarbeitungsschaltung (34) als Teil eines monolithischen Körpers (80) gebildet sind.

26. Verfahren gemäß Anspruch 25, wobei jeder Akustikwandler (32) und seine jeweilige Verarbeitungsschaltung (34) auf einem Halbleitersubstrat (86) angeordnet sind.

## Revendications

1. Un appareil capteur (100) comprenant :
une pluralité de transducteurs acoustiques (32) fonctionnant chacun pour produire un changement dans un signal électronique de sortie en réponse à la réception d'un signal acoustique ; et
une pluralité de circuits de traitement (34) fonctionnant chacun pour produire un décalage de phase ;
**caractérisé en ce que** :
chacun des transducteurs acoustiques (32) a un circuit de traitement respectif parmi les circuits de traitement (34) associé à celui-ci ;
chaque circuit de traitement (34) étant configuré pour recevoir un premier signal électronique de sortie et un deuxième signal électronique de sortie produits par son transducteur acoustique respectif (32) et fonctionnant pour décaler une phase du premier signal électronique de sortie et du deuxième signal électronique de sortie l'une par rapport à l'autre, et
chaque transducteur acoustique (32) étant juxtaposé à son circuit de traitement respectif associé (34) de façon à ce qu'un corps unitaire respectif (30) soit formé.

2. Appareil selon la revendication 1, dans lequel chaque circuit de traitement (34) a des dimensions qui sont inférieures ou similaires aux dimensions du transducteur associé (32).

3. Appareil selon la revendication 1 ou la revendication 2, dans lequel chacun des transducteurs acoustiques (32) fonctionne pour produire au moins soit un changement dans un niveau de charge, soit un changement dans un niveau de tension en réponse à la réception d'un signal acoustique.

4. Appareil selon n'importe quelle revendication précédente, dans lequel chacun des transducteurs acoustiques (32) comprend un transducteur piézoélectrique fonctionnant pour produire un changement dans un niveau de charge.

5. Appareil selon la revendication 4, dans lequel chaque transducteur piézoélectrique (32) comprend un élément formé en polyfluorure de vinylidène (PVDF) ou en un matériau piézocéramique.

6. Appareil selon n'importe quelle revendication précédente, dans lequel chaque circuit de traitement (34) comprend un registre à décalage analogique (39) configuré pour recevoir chaque signal électronique de sortie parmi le premier signal électronique de sortie et le deuxième signal électronique de sortie et pour décaler la phase du premier signal électronique de sortie et du deuxième signal électronique de sortie l'une par rapport à l'autre.

7. Appareil selon la revendication 6, dans lequel le registre à décalage analogique (39) peut être commandé pour changer une temporisation d'un signal électronique de sortie qui le traverse.

8. Appareil selon la revendication 6 ou la revendication 7, dans lequel le registre à décalage analogique comprend un dispositif à couplage de charge (DCC) (39) configuré pour recevoir chaque signal électronique de sortie parmi le premier signal électronique de sortie et le deuxième signal électronique de sortie et pour décaler la phase du premier signal électronique de sortie et du deuxième signal électronique de sortie l'une par rapport à l'autre.

9. Appareil selon n'importe quelle revendication précédente, dans lequel l'appareil capteur (100) comprend en outre au moins un amplificateur (36).

10. Appareil selon la revendication 9, dans lequel une pluralité d'amplificateurs (36) sont prévus, un amplificateur respectif (36) étant interposé entre chaque transducteur acoustique (32) et son circuit de traitement respectif (34).

11. Appareil selon n'importe quelle revendication précédente, comprenant en outre au moins un tampon configuré pour maintenir substantiellement une connexion de sortie du tampon à un niveau de signal correspondant à un niveau de signal à une entrée dans le tampon lorsqu'une charge ne dépassant pas une limite prédéterminée est appliquée à la connexion de sortie du tampon.

12. Appareil selon la revendication 11, dans lequel un tampon respectif est interposé entre chaque transducteur acoustique (32) et son circuit de traitement associé (34).

13. Appareil selon n'importe quelle revendication précédente, dans lequel les transducteurs acoustiques (32) sont formés en corps distincts à partir des circuits de traitement (34), et chacun desdits corps unitaires (30) consiste en un transducteur acoustique (32) et un circuit de traitement (34) couplés de façon rigide ensemble.

14. Appareil selon la revendication 13, dans lequel des contacts électriques (70) de chaque transducteur acoustique (32) sont couplés de façon électrique et de façon mécanique à des contacts électriques (70) de son circuit de traitement respectif (34) pour fournir un couplage rigide entre le transducteur acoustique (32) et le circuit de traitement (34).

15. Appareil selon la revendication 14, dans lequel lesdits contacts sont connectés par des éléments de couplage rigides et électriquement conducteurs respectifs (66).

16. Appareil selon la revendication 15, dans lequel lesdits éléments de couplage sont formés au moins en partie en brasure.

17. Appareil selon n'importe lesquelles des revendications 1 à 12, dans lequel chaque corps unitaire (30) fourni par un transducteur acoustique (32) et un circuit de traitement (34) juxtaposés fait partie d'un corps monolithique (80).

18. Appareil selon la revendication 17, dans lequel le transducteur acoustique (32) et le circuit de traitement (34) sont disposés sur un substrat semi-conducteur commun (86).

19. Appareil selon la revendication 18, dans lequel le circuit de traitement (34) est formé dans et par-dessus le substrat (86) et le transducteur acoustique (32) est formé par-dessus le circuit de traitement (34).

20. Appareil sonar comprenant un appareil capteur selon n'importe quelle revendication précédente.

21. Une méthode pour former un appareil capteur (100) selon n'importe quelle revendication précédente, la méthode comprenant juxtaposer chaque transducteur acoustique parmi une pluralité de transducteurs acoustiques (32) à un circuit de traitement respectif parmi une pluralité de circuits de traitement (34) pour former un corps unitaire respectif (30).

22. La méthode de la revendication 21, dans laquelle chacun des transducteurs acoustiques (32) et chacun des circuits de traitement (34) est formé en un corps distinct ; et dans laquelle chaque transducteur acoustique (32) est couplé de façon rigide à un circuit de traitement respectif (34) pour former undit corps unitaire (30).

23. La méthode selon la revendication 22, dans laquelle le transducteur acoustique (32) et le circuit de traitement (34) sont couplés de façon rigide par l'étape consistant à coupler de façon électrique et de façon mécanique des contacts électriques (70) de l'un à des contacts électriques (70) de l'autre.

24. La méthode selon la revendication 23, dans laquelle lesdits contacts sont couplés de façon électrique et de façon mécanique en soudant les contacts respectifs (70) l'un à l'autre.

25. La méthode selon la revendication 21, dans laquelle chaque transducteur acoustique (32) et son circuit de traitement respectif (34) sont formés comme faisant partie d'un corps monolithique (80).

26. La méthode de la revendication 25, dans laquelle chaque transducteur acoustique (32) et son circuit de traitement respectif (34) sont disposés sur un substrat semi-conducteur (86).
